# EUROPÄISCHE PATENTSCHRIFT

(11) **EP 0 609 245 B1**
(45) Veröffentlichungstag und Bekanntmachung des Hinweises auf die Patenterteilung: **17.01.1996**
(21) Anmeldenummer: 92920081.4
(22) Anmeldetag: 19.09.1992
(51) Int. Cl.: F16D 65/092

(54) **BREMSKLOTZ MIT VERDREHGESICHERTER HALTEFEDER**
BRAKE PAD WITH ANTI-ROTATION SECURING SPRING
PLAQUETTE DE FREIN AVEC RESSORT DE RETENUE RESISTANT A LA ROTATION

(30) Priorität: 02.11.1991 DE 4136107
(43) Veröffentlichungstag der Anmeldung: 10.08.1994
(73) Patentinhaber: ITT Automotive Europe GmbH, D-60488 Frankfurt (DE)
(72) Erfinder: RÜCKERT, Helmut, D-6107 Reinheim 3 (DE)
(74) Vertreter: Portwich, Peter
(86) Internationale Anmeldenummer: EP9202168
(87) Internationale Veröffentlichungsnummer: WO9309359

(56) Entgegenhaltungen:
- EP-A- 0 112 255
- EP-A- 0 311 239
- EP-A- 0 440 041
- WO-A-92/13210
- US-A- 4 313 527
- US-A- 4 609 077

## Beschreibung

Die Erfindung betrifft einen Bremsklotz für Scheibenbremsen gemäß dem Oberbegriff des Patentanspruchs 1, bei dem eine an der Belagrückenplatte befestigte Haltefeder gegen Verdrehen gesichert ist, und ein Verfahren zur Herstellung eines erfindungagemäßen Bremsklotzes.

Aus der DE-A-3842428 ist ein Bremsklotz bekannt, der zur Verwendung in einer Schwimmsattel-Teilbelagscheibenbremse bestimmt ist. Im eingebauten Zustand liegt der Bremsklotz mit seiner Belagrückenplatte an einem Bremskolben einer hydraulischen Betätigungsvorrichtung an. Beim Bremsen wirkt der Bremskolben direkt auf den Bremsklotz ein und drückt ihn an die Bremsscheibe an. Nach dem Bremsen wird der Bremskolben in bekannter Weise mittels eines Roll-Back-Dichtrings ein kleines Stück entgegen der Betätigungsrichtung zurückgezogen, um ein Lüftspiel zwischen der Reibfläche des Bremsklotzes und der Bremsscheibe einzustellen. Damit der Bremsklotz dieser Bewegung folgt, ist er mittels einer Haltefeder am Bremskolben festgeklemmt. Die Haltefeder besitzt drei Federzungen, die in den hohlen Bremskolben eingreifen. Eine der Federzungen dient gleichzeitig zum Vorspannen des Bremsklotzes gegenüber dem Bremsengehäuse, um ein Klappern des Bremsklotzes in seinen Führungen zu verhindern. Dabei wird der Bremsklotz radial in Richtung Bremsscheibenachse gedrückt. Um diese Funktion zu gewährleisten, muß die Haltefeder in einer bestimmten Position an der Belagrückenplatte befestigt werden, und sie darf sich im Betrieb nicht verdrehen.

Bei dem bekannten Bremsklotz ist die Haltefeder auf einfache Weise durch einen einzigen Bolzen oder Stift befestigt, der in die Belagrückenplatte eingepreßt ist. Um ein Verdrehen der Haltefeder um den Bolzen zu verhindern, ist vorgesehen, daß die Haltefeder formschlüssig mit einem ebenfalls auf der Belagrückenplatte befestigten Dämpfungsblech in Verbindung steht. Diese Verdrehsicherung kann jedoch bei Bremsklötzen ohne Dämpfungsblech nicht angewandt werden.

Eine andere verdrehgesicherte Befestigung ist beispielsweise aus der EP 0112255 B1 bekannt. Hier ist die Belagrückenplatte mit einer angeformten Durchstellung versehen, die aus der Plattenebene herausragt und einen D-förmigen Querschnitt aufweist. Die Haltefeder besitzt eine D-förmige Öffnung zum Durchgang der Durchstellung, wobei die formschlüssige Verbindung ein Verdrehen der Haltefeder um die einzige Befestigungsstelle verhindert. Die Befestigung erfolgt durch Vernieten der Durchstellung, beispielsweise durch eine Taumelnietung.

Diese Befestigungsart hat aber den Nachteil, daß zum Verstemmen oder Vernieten große Kräfte aufgewandt werden müssen, um das erforderliche Werkstoffvolumen zu verformen. Wegen unvermeidlicher Fertigungstoleranzen besteht dabei die Gefahr, daß die Haltefeder selbst oder die Belagrückenplatte verbogen werden und die einwandfreie Funktion des Bremsklotzes nicht mehr gewährleistet ist.

Aufgabe der Erfindung ist es, einen verbesserten Bremsklotz zu schaffen, bei dem die Haltefeder auf einfache Weise an der Belagrückenplatte befestigt und gegen Verdrehen gesichert ist. Weiterhin soll ein verbessertes Verfahren zur Befestigung einer Haltefeder an einem erfindungsgemäßen Bremsklotz angegeben werden, das gegenüber Fertigungstoleranzen unempfindlich ist.

Die Aufgabe wird durch die Merkmale des Patentanspruchs 1 bzw. 4 gelöst. Im Prinzip besteht die Lösung darin, daß ein zur Befestigung der Haltefeder vorgesehener Vorsprung der Belagrückenplatte erst beim Vernieten an die Form einer zum Durchgang des Vorsprungs vorgesehenen Öffnung der Haltefeder angepaßt wird. Die Öffnung ist oval oder eckig, im jeden Fall aber so ausgeführt, daß die Haltefeder sich nicht um den die Öffnung ausfüllenden Vorsprung drehen kann.

Bei der Herstellung des Bremsklotzes gemäß Anspruch 4 wird der Vorsprung an die Belagrückenplatte angeformt und steht aus der Plattenebene hervor, wobei er im Querschnitt zunächst eine geringere Dicke aufweist als die kleinste Weite der Öffnung. Nach dem Aufstecken der Haltefeder wird das Material des Vorsprungs durch Verstemmen oder Vernieten seitlich gegen die Ränder der Öffnung gedrückt, wobei sich der Querschnitt des Vorsprungs an die Form der Öffnung von selbst anpaßt und eine formschlüssige, verdrehsichere Verbindung zwischen Haltefeder und Bremsklotz entsteht.

Bei einem erfindungsgemäß ausgestalteten Bremsklotz sind nur sehr viel geringere Kräfte zum Vernieten des Vorsprungs nötig als bei den bekannten Anordnungen. Dies kann darauf zurückgeführt werden, daß der Versprung zunächst einen verhältnismäßig kleinen Querschnitt aufweist und daher beim Vernieten relativ wenig Material verformt werden muß. Bei einer gebräuchlichen, beispielsweise aus der EP 0112255 B1 bekannten Anordnung hingegen füllt der Vorsprung mit seinem D-förmigen Querschnitt schon vor dem Vernieten die D-förmige Öffnung der Haltefeder formschlüssig aus, ist also bei gegebenen Abmessungen der Öffnung relativ dick und muß mit entsprechend starken Kräften vernietet werden.

In der Praxis kann bei einem erfindunggemäßen Bremsklotz die zum Vernieten erforderliche Kraft auf etwa die Hälfte der Kraft reduziert werden, die bei vergleichbar dimensionierten Anordnungen mit bekannter Ausgestaltung erforderlich ist. Dies hat unter anderem den Vorteil, daß die Gefahr von Maßänderungen wie z. B. Ausbeulen der Haltefeder oder der Belagrückenplatte während der Bremsklotzfertigung deutlich vermindert und die Ausbeute qualitativ einwandfreier Bremsklötze erhöht wird. Auch der Taumelwinkel der Nietkraftrichtung und die zum Vernieten erforderliche Zeit werden reduziert. Eine geringere Taktzeit bei der Fertigung hat aber den Vorteil, daß die Produktionsmittel wirtschaftlicher genutzt werden. Ein geringer Taumelwinkel der Nietkraftrichtung ist von Vorteil bei ungünstigen Platzverhältnissen, beispielsweise wenn Haltefedern mit eng beabstandeten Federzungen zum Eingriff in kleine Bremskolben mit geringem Innendurchmesser befestigt werden müssen. Hinzu kommt, daß das erfindungsgemäße Herstellungsverfahren hinsichtlich der Nietkraft und Nietzeit hohe Toleranzen zuläßt und damit ein hohes Maß an Sicherheit im Fertigungsprozeß gewährleistet. Ein weiterer Vorteil ergibt sich aus dem Umstand, daß die Form des Vorsprungs erst beim Vernieten an die Form der Öffnung der Haltefeder angepaßt wird. Dabei werden fertigungstechnisch bedingte Maßtoleranzen automatisch ausgeglichen. Schließlich sei noch auf die Erfahrung hingewiesen, daß man die Qualität einer erfindungsgemäßen Befestigungsstelle aufgrund ihres verbesserten optischen Erscheinungsbildes zuverlässiger als bisher mittels einfacher Sichtprüfung beurteilen und überwachen kann.

Zur Ausführung der Erfindung wird eine Merkmalskombination gemäß Anspruch 2 empfohlen. Die dort genannten Formen der Öffnung der Haltefeder sind einfach herzustellen und sichern die Haltefeder zuverlässig gegen Verdrehen. Besonders gute Erfahrungen wurden mit einer quadratischen Öffnung gemäß Anspruch 3 gemacht.

Ein Vorsprung mit kreisförmigem Querschnitt gemäß Anspruch 5 erfordert aufgund seiner einfachen Form einen geringen Fertigungsaufwand und paßt sich beim Vernieten ohne weiteres an die Form der Öffnung an, insbesondere in Verbindung mit einer quadratischen Öffnung gemäß Anspruch 6. Dabei hat sich die Kombination eines Vorsprungs mit 5 mm Durchmesser und einer Öffnung mit 5,2 mm Seitenlänge als optimal herausgestellt. Bei den genannten Abmessungen wird gemäß Anspruch 7 eine Kraft von 4500 N zum Vernieten empfohlen. Der Vorsprung selbst wird vorzugsweise gemäß Anspruch 8 mittels eines Stempels an die Belagrückenplatte angeformt.

Ausführungsbeispiele der Erfindung werden nachfolgend anhand der Zeichnungen näher erläutert.

Es zeigen
- Fig. 1: eine Draufsicht auf die Rückseite eines erfindungsgemäßen Bremsklotzes;
- Fig. 2: einen Schnitt gemäß Linie A-A aus Fig. 1;
- Fig. 3: eine Teilansicht eines erfindungsgemäßen Bremsklotzes vor dem Vernieten der Haltefeder;
- Fig. 4: wie Fig. 3, nach dem Vernieten;
- Fig. 5: eine gemäß Linie B-B von Fig. 2 geschnittene Teilansicht eines Bremsklotzes nach dem Vernieten der Haltefeder;
- Fig. 6: wie Fig. 3, jedoch mit alternativen Formen der Öffnung der Haltefeder: a) dreieckig, b) achteckig, c) oval, d) D-förmig.

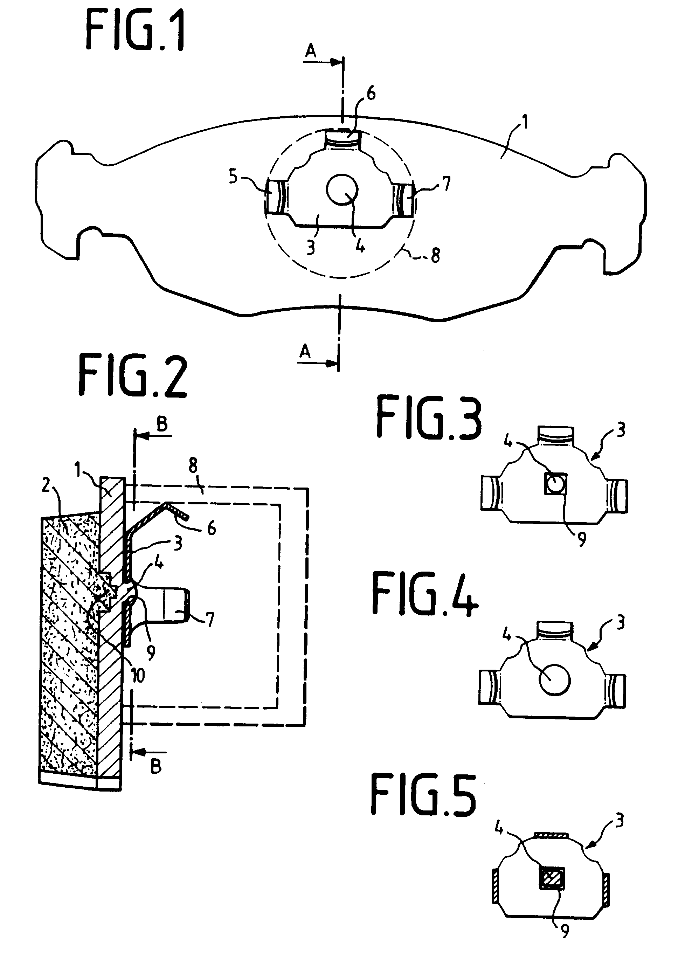

Der in den Figuren 1 und 2 dargestellte Bremsklotz besteht aus einer Belagrückenplatte 1, die auf einer Seite mit einem Reibbelag 2 und auf der anderen Seite mit einer Haltefeder 3 aus Federblech versehen ist. Zur Befestigung der Haltefeder 3 ist ein Vorsprung 4 vorgesehen, der an die Belagrückenplatte 1 angeformt ist und aus der Plattenebene hervorsteht. Die Haltefeder 3 besitzt drei Federarme 5, 6, 7 zum Eingriff in einen hohlen Bremskolben 8, der in den Figuren durch Strichelung angedeutet ist.

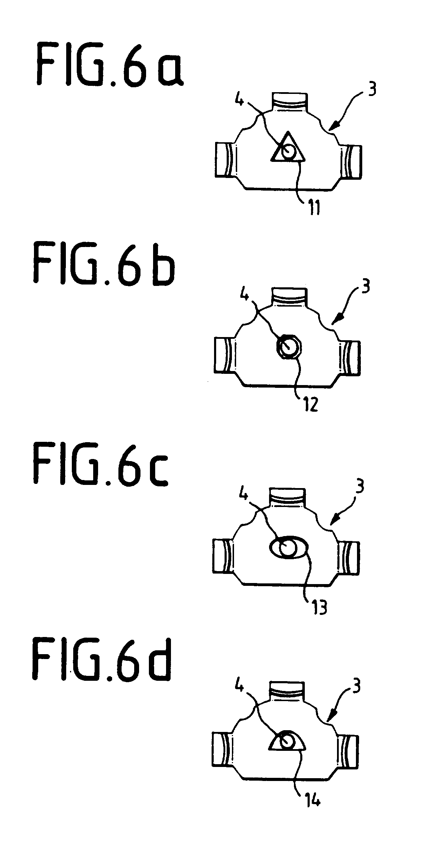

Wie man in Figur 5 erkennen kann, weist der zentrale Abschnitt der Haltefeder 3 eine quadratische Öffnung 9 auf, durch die der Vorsprung 4 hindurch geht. Der Vorsprung 4 füllt die Öffnung 9 formschlüssig aus, so daß sich die Haltefeder 3 nicht um den Befestigungspunkt drehen kann. Gleichzeitig ragt der Vorsprung 4 seitlich über die Ränder der Öffnung 9 (Figur 2) und drückt die Haltefeder 3 gegen die Belagrückenplatte 1, so daß die Haltefeder 3 sicher an der Belagrückenplatte 1 befestigt ist. Die Haltefeder 3 besteht aus einem Stück Federblech. Sie wird durch Ausstanzen und Biegen hergestellt, wobei auch die quadratische Öffnung 9 erzeugt wird.

Bei der Fertigung des Bremsklotzes wird vor dem Aufbringen des Reibbelags 2 der Vorsprung 4 an die Belagrückenplatte 1 angeformt, indem ein Stempel auf die für den Reibbelag 2 vorgesehene Seite der Belagrückenplatte 1 einwirkt und den Vorsprung 4 durchstellt, so daß er auf der anderen Seite der Belagrückenplatte 1 hervorsteht. Der Stempel erzeugt dabei die Einprägung 10, die beim Aufbringen des Reibbelags 2 mit Reibmaterial gefüllt wird. Wie man in Figur 3 erkennt, ist der Querschnitt des Vorsprungs 9 nach dem Anformen und vor der Befestigung der Haltefeder 3 zunächst rund und weist einen kleineren Durchmesser auf als die kleinste Weite (Seitenlänge) der quadratischen Öffnung 9 der Haltefeder 3.

Zur Befestigung an der Belagrückenplatte 1 wird die Haltefeder 3 mit ihrer Öffnung 9 über den Vorsprung 4 gesteckt und in die korrekte Winkellage gebracht. Diese Situation ist in Figur 3 dargestellt. Danach wird der Vorsprung 4 vernietet, so daß er, wie in Figur 4 dargestellt ist, zur Seite hin verbreitert über die Ränder der Öffnung 9 ragt und die Haltefeder 3 an die Belagrückenplatte 1 anpreßt. Beim Vernieten verformt sich aber auch der die öffnung 9 durchragende Abschnitt des Vorsprungs 4, wie man in der geschnittenen Darstellung von Figur 5 erkennt. Sein Querschnitt wird breiter, bis er an die Ränder der Öffnung 9 anstößt und seine Form an die quadratische Form der Öffnung 9 anpaßt. Dabei entsteht zwischen der Haltefeder 3 und dem Vorsprung 4 ein Formschluß, der ein Verdrehen der Haltefeder 3 gegen die Belagrückenplatte 1 verhindert. Bei dem in den Figuren 1 bis 5 dargestellten, ersten Ausführmgsbeispiel hat der ursprünglich runde Querschnitt des Vorsprungs 4 einen Durchmesser von 5 mm und die quadratische Öffnung 9 eine Seitenlänge von 5,2 mm. Zum Vernieten wird eine Kraft von 4500 N angewendet.

In Figur 6 sind weitere Beispiele erfindungsgemäß ausgestalteter Haltefedern 3 dargestellt. Die Haltefedern 3 sind jeweils schon auf einen im Querschnitt kreisförmigen Vorsprung 4 der nicht gezeigten Belagrückenplatte 1 aufgesteckt. Die Situation von Figur 6 entsprigt der von Figur 3, bei der der Vorsprung 4 noch nicht vernietet ist. Nach dem Vernieten wird die jeweilige Öffnung 11,12,13,14 von dem verformten Vorsprung 4 im wesentlichen verdeckt, so daß ihre dreieckige, achteckige, ovale oder D-förmige Ausgestaltung von außen nicht mehr erkennbar ist und das Erscheinungsbild des Bremsklotzes dem von Figur 1 und 4 entspricht. Im Inneren der Öffnung 11,12,13,14 ist der jeweilige Vorsprung 4 jedoch in analoger Weise, ähnlich wie in Figur 5, derart verformt, daß er sich im wesentlichen an die Form der zugehörigen Öffnung 11,12,13,14 anpaßt und mit deren Rändern formschlüssig verbunden ist.

## Patentansprüche

1. Bremsklotz für Scheibenbremsen, mit einer einen Reibbelag (2) tragenden Belagrückenplatte (1) und einer Haltefeder (3) aus Federblech, die auf der dem Reibbelag (2) abgewandten Seite an der Belagrückenplatte (1) befestigt ist, mit einem zur Anlage an die Belagrückenplatte (1) bestimmten Abschnitt der Haltefeder (3), der eine eckige oder ovale Öffnung (9,11,12,13,14) aufweist, und mit einem an die Belagrückenplatte (1) angeformten, aus der Plattenebene hervorstehenden, durch die Öffnung (9,11,12,13,14) ragenden Vorsprung (4), der mit der Haltefeder (3) vernietet ist, dadurch **gekennzeichnet,** daß der Vorsprung (4) der Belagrückenplatte (1) vor dem Vernieten einen im wesentlichen kreisrunden Querschnitt aufweist, dessen Durchmesser kleiner als die kleinste Weite der Öffnung (9,11,12,13,14) ist, und daß der Querschnitt des Vorsprungs (4) nach dem Vernieten im wesentlichen die Form der Öffnung (9,11,12,13,14) aufweist und durch die Nietung derart verformt ist, daß er die Öffnung (9,11,12,13,14) formschlüssig ausfüllt.

2. Bremsklotz nach Anspruch 1, dadurch **gekennzeichnet,** daß die Öffnung (9,11,12,13,14) der Haltefeder (3) elliptisch oder in Form eines Dreiecks, Vierecks oder Vielecks, oder D-förmig ausgebildet ist.

3. Bremsklotz nach Anspruch 1 oder 2, dadurch **gekennzeichnet,** daß die Öffnung (9) der Haltefeder (3) quadratisch geformt ist.

4. Verfahren zur Herstellung eines Bremsklotzes **gekennzeichnet** durch folgende Verfahrensschritte:
- eine am Bremsklotz zu befestigende Haltefeder (3) aus Federblech wird mit einer ovalen, D-förmigen oder eckigen Öffnung (9,11,12,13,14) versehen;
- an eine Belagrückenplatte (1) wird ein im wesentlichen kreisrunder Vorsprung (4) angeformt, der aus der Plattenebene hervorsteht und dessen Durchmesser kleiner ist als die kleinste Weite der Öffnung (9,11,12,13,14) der Haltefeder (3);
- die Haltefeder (3) wird auf die Belagrückenplatte (1) gelegt, so daß der Vorsprung (4) durch die Öffnung (9,11,12,13,14) ragt;
- der Vorsprung (4) wird verstemmt oder vernietet bis er sich formschlüssig an die Kanten der Öffnung (9,11,12,13,14) anschmiegt.

5. Verfahren nach Anspruch 4, dadurch **gekennzeichnet,** daß der Vorsprung (4) der Belagrückenplatte (1) einen kreisförmigen Querschnitt mit 5 mm Durchmesser aufweist.

6. Verfahren nach Anspruch 4 oder 5, dadurch **gekennzeichnet,** daß die Öffnung (9) der Haltefeder (3) die Form eines Quadrats mit 5,2 mm Seitenlänge aufweist.

7. Verfahren nach Anspruch 5 oder 6, dadurch **gekennzeichnet,** daß zum Vernieten des Vorsprungs (4) eine Kraft von etwa 4500 N angewendet wird.

8. Verfahren nach einem der Ansprüche 4 bis 7, dadurch **gekennzeichnet,** daß der Vorsprung (4) mittels eines auf die andere Seite der Belagrückenplatte (1) einwirkenden Stempels angeformt wird, der den Vorsprung (4) durchstellt.

## Claims

1. A brake shoe for disc brakes, comprising a pad back plate (1) provided with a friction pad (2), and a retaining spring (3) of spring sheet which, on the side facing away from the friction pad (2), is fixed to the pad back plate (1), including a section of the retaining spring (3) intended for abutment with the pad back plate (1) and having an angular or oval opening (9,11,12,13,14), and including a projection (4) moulded to the pad back plate (1) and projecting from the plate plane and protruding through the opening (9,11,12,13,14) being riveted to the retaining spring (3),
characterized in that the projection (4) of the pad back plate (1), prior to riveting, is of a substantially circular cross-section, the diameter of which is smaller than the smallest width of the opening (9,11,12,13,14), and in that the cross-section of the projection (4), after riveting, substantially has the form of the opening (9,11,12,13,14) and is deformed by riveting so as to fill up, in form-locking manner, the opening (9,11,12,13,14).

2. A brake shoe as claimed in claim 1,
characterized in that the opening (9,11,12,13,14) of the retaining spring (3) is of an elliptical, triangular, rectangular, polygonal or D-shaped configuration.

3. A brake shoe as claimed in claim 1 or 2,
characterized in that the opening (9) of the retaining spring (3) is of a square configuration.

4. A method of manufacturing a brake shoe,
characterized by the following process steps:
- providing a retaining spring (3) of spring sheet, to be fixed to the brake shoe, with an oval, D-shaped or angular opening (9,11,12,13,14);
- moulding a substantially circular projection (4) to a pad back plate (1), which projection protrudes from the plate plane and the diameter of which is smaller than the smallest width of the opening (9,11,12,13,14) of the retaining spring (3);
- placing the retaining spring (3) on the pad back plate (1) such that the projection (4) protrudes through the opening (9,11,12,13,14);
- caulking or riveting the projection (4) until it conforms, in form-locking manner, to the edges of the opening (9,11,12,13,14).

5. A process as claimed in claim 4,
characterized in that the projection (4) of the pad back plate (1) has a circular cross-section of a diameter of preferably 5 mms.

6. A process as claimed in claim 4 or 5,
characterized in that the opening (9) of the retaining spring (3) is of a square configuration having a side length of preferably 5.2 mms.

7. A process as claimed in claim 5 or 6,
characterized in that the projection (4) is riveted at a force of about 4500 N.

8. A process as claimed in any one of claims 4 to 7,
characterized in that the projection (4) is moulded by means of a plunger acting upon the other side of the pad back plate (1), which plunger then punches through the projection (4).

## Revendications

1. Plaquette de frein, pour frein à disque, comprenant une plaquette de support de garniture (1), qui porte une garniture de friction (2), un ressort de maintien (3), en tôle à ressort, qui est fixé sur la plaquette de support de garniture (1) sur la face opposée à la garniture de friction (2) et dont une partie, destinée à être appliquée sur la plaquette de support de garniture (1), comporte une ouverture polygonale ou ovale (9, 11, 12, 13, 14), et une partie en saillie (4) qui est réalisée au formage sur la plaquette de support de garniture (1) et fait saillie hors du plan de la plaquette, en dépassant de l'ouverture (9, 11, 12, 13, 14,) et qui est fixée par rivetage au ressort de maintien (3), caractérisée en ce qu'avant le rivetage, la partie en saillie (4) de la plaquette de support de garniture (1) a une section transversale pratiquement circulaire dont le diamètre est inférieur à la plus petite dimension intérieure libre de l'ouverture (9, 11, 12, 13, 14) et en ce qu'après le rivetage, la section transversale de la partie en saillie (4) a pratiquement la forme de l'ouverture (9, 11, 12, 13, 14) et est déformée sous l'effet du rivetage d'une façon telle qu'elle remplit l'ouverture (9, 11, 12, 13, 14) par complémentarité de formes.

2. Plaquette de frein selon la revendication 1, caractérisée en ce que l'ouverture (9, 11, 12, 13, 14) du ressort de maintien (3) est elliptique ou est réalisée sous forme d'un triangle, un rectangle ou un polygone ou en forme de D.

3. Plaquette de frein selon la revendication 1 ou 2, caractérisée en ce que l'ouverture (9) du ressort de maintien (3) a une forme carrée.

4. Procédé de fabrication d'une plaquette de frein, caractérisé par les étapes de procédé suivantes:
- on pratique, dans un ressort de maintien (3) en tôle à ressort, qui doit être fixé sur la plaquette de frein, une ouverture ovale, en forme de D ou polygonale (9, 11, 12, 13, 14),
- on réalise au formage, sur une plaquette de support de garniture (1), une partie en saillie (4) pratiquement circulaire qui fait saillie hors du plan de la plaquette et dont le diamètre est inférieur à la plus petite dimension intérieure libre de l'ouverture (9, 11, 12, 13, 14) du ressort de maintien(3),
- on met le ressort de maintien (3) en place sur la plaquette de support de garniture, d'une façon telle que la partie en saillie (4) dépasse de l'ouverture (9, 11,12, 13, 14),
- on soumet la partie en saillie (4) à un matage ou un rivetage, jusqu'à ce qu'elle épouse la forme des bords de l'ouverture (9, 11, 12, 13, 14) par complémentarité de formes.

5. Procédé selon la revendication 4, caractérisé en ce que la partie en saillie (4) de la plaquette de support de garniture (1) a une section transversale circulaire dont le diamètre est égal à 5 mm.

6. Procédé selon la revendication 4 ou 5, caractérisé en ce que l'ouverture (9) du ressort de maintien (3) a !a forme d'un carré ayant une longueur de côté égale à 5,2 mm.

7. Procédé selon la revendication 5 ou 6, caractérisé en ce qu'on utilise une force égale à 4500 N environ pour le rivetage de la partie en saillie (4).

8. Procédé selon les revendications 4 à 7, caractérisé en ce qu'on réalise la partie en saillie (4) au formage au moyen d'un poinçon qui exerce son action sur la seconde face de la plaquette de support de garniture (1) et qui forme par repoussage la partie en saillie (4).
